(19) Europäisches Patentamt / European Patent Office / Office européen des brevets

(11) **EP 2 643 714 B1**

(12) **FASCICULE DE BREVET EUROPEEN**

(45) Date de publication et mention
de la délivrance du brevet:
**06.11.2019 Bulletin 2019/45**

(21) Numéro de dépôt: **11802507.1**

(22) Date de dépôt: **24.11.2011**

(51) Int Cl.:
***G02B 1/11*** *(2015.01)*

(86) Numéro de dépôt international:
**PCT/FR2011/052754**

(87) Numéro de publication internationale:
**WO 2012/069767 (31.05.2012 Gazette 2012/22)**

(54) **SUBSTRAT TRANSPARENT COMPORTANT UN REVETEMENT ANTIREFLET**

TRANSPARENTES SUBSTRAT MIT EINER ANTIREFLEXIONSBESCHICHTUNG

TRANSPARENT SUBSTRATE COMPRISING AN ANTI-REFLECTION COATING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.11.2010 FR 1059809**

(43) Date de publication de la demande:
**02.10.2013 Bulletin 2013/40**

(60) Demande divisionnaire:
**19198544.9**

(73) Titulaire: **Saint-Gobain Glass France
92400 Courbevoie (FR)**

(72) Inventeurs:
• **GERARDIN, Hadia
F-75012 Paris (FR)**
• **ROCHE, Stéphanie
92500 Rueil Malmaison (FR)**

(74) Mandataire: **Saint-Gobain Recherche
Département Propriété Industrielle
39 Quai Lucien Lefranc
93300 Aubervilliers (FR)**

(56) Documents cités:
EP-A2- 0 183 052      EP-A2- 0 515 847
WO-A2-2004/005210      FR-A1- 2 898 295
FR-A1- 2 928 461

**Description**

L'invention concerne un substrat transparent, notamment en verre, destiné à constituer ou à être incorporé dans un vitrage et comprenant, sur au moins une de ses faces, un revêtement antireflet.

Un revêtement antireflet est usuellement constitué d'un empilement de couches minces interférentielles, en général une alternance de couches à base de matériau diélectrique à forts et faibles indices de réfraction. Incorporé à un support transparent le plus souvent verrier, un tel revêtement a pour principale fonction d'en diminuer la réflexion lumineuse et d'en augmenter la transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est préférable de munir les deux faces du substrat de ce type de revêtement.

Il y a beaucoup d'applications à ce type de produit : il peut servir de ou être incorporé à un vitrage dans le bâtiment, ou servir de vitrage dans les meubles de vente, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir. Des exemples de tels vitrages sont notamment commercialisés par de la société déposante sous la référence Vision-lite®.

Selon une application, il est également possible d'utiliser de tels substrats dans le domaine des vitrages automobiles, notamment comme vitre latérale des cabines de camions, des cabines de bus ou d'engins agricoles. Cela permet d'éviter certaines réflexions parasites jugées inesthétiques. En outre ces réflexions peuvent perturber le conducteur, notamment lors d'une conduite de nuit, en particulier si le véhicule est éclairé de l'intérieur.

La plupart des revêtements antireflets mis au point à ce jour ont été optimisés pour minimiser la réflexion lumineuse à incidence normale, la durabilité mécanique de l'empilement et la tenue du produit aux traitements thermiques et plus rarement l'aspect optique et l'esthétique du vitrage, vu de façon oblique.

Cependant, très peu d'études ont été réalisées sur la durabilité chimique de tels revêtements antireflets, notamment dans la cadre d'une utilisation en extérieur au cours de laquelle ils sont régulièrement soumis à des conditions s'apparentant à des attaques chimiques relativement sévères du type pluies acides ou pollution ambiante.

Il est connu qu'à incidence normale, on peut obtenir des valeurs de réflexion lumineuse $R_L$ très faibles avec des empilements à trois ou préférentiellement à quatre couches avec une alternance couche à haut indice / couche à bas indice / couche à haut indice / couche à bas indice. Les couches à haut indice sont classiquement en $TiO_2$ qui présente effectivement un indice très élevé, d'environ 2,45 à 550 nm et les couches à bas indice sont le plus souvent en $SiO_2$.

Dans la plupart des réalisations de l'art antérieur, l'aspect en réflexion, notamment la couleur en réflexion du vitrage, n'est cependant pas satisfaisante dès que l'on s'éloigne un peu d'une vision sensiblement perpendiculaire au vitrage (incidence normale).

La résistance mécanique et la tenue thermomécanique de ce type d'empilements ne sont également pas satisfaisantes. Le plus souvent, l'empilement présente, notamment après un traitement thermique du type trempe ou bombage une mauvaise tenue mécanique ou un flou très nettement supérieur à 1%.

Des études ont été faites pour prendre en compte un angle de vision oblique, mais n'ont pas donné non plus pleinement satisfaction : on peut par exemple citer le brevet EP-0 515 847 qui propose un empilement deux couches du type $TiO_2+SiO_2/SiO_2$ ou à trois couches du type $TiO_2+SiO_2/TiO_2/SiO_2$ déposées par sol-gel, mais qui n'est pas assez performant. Cette technique de dépôt présente également l'inconvénient de produire des empilements de faible résistance mécanique.

La demande de brevet WO2004/005210 se propose de remédier aux inconvénients ci-dessus, en proposant un revêtement antireflet qui garantisse à la fois une bonne esthétique du vitrage et ce quel que soit l'angle d'incidence, et notamment à 0°, une durabilité mécanique élevée et une bonne tenue aux traitements thermiques (recuit, trempe, bombage, pliage), et ceci sans compromettre la faisabilité économique et/ou industrielle de sa fabrication. Pour ce faire, il est proposé dans cet enseignement antérieur l'utilisation d'un substrat comprenant un empilement à 4 couches comprenant une succession de couches à haut et bas indice, les couches à base indice présentant un indice de réfraction proche de 2 du type $SnO_2$, $Si_3N_4$, ou oxyde mixte de zinc combiné avec de l'étain, du titane, du zinc ou encore du silicium. La publication indique dans les exemples fournis que des empilements de couches incorporant le composé inorganique défini $SnZn_2O_4$ présentent une résistance mécanique améliorée.

Cependant, bien que ces empilements donnent maintenant satisfaction en ce qui concerne leur propriétés optiques et de colorimétrie, ainsi que leur propriétés mécaniques et de résistance aux traitements thermiques, les essais effectués par les demanderesses sur de tels empilements, en particulier ceux incorporant le composé $SnZn_2O_4$ dans au moins une des couches haut indice, ont montré que la résistance chimique desdits empilements n'était pas suffisante sur de longues durées, c'est-à-dire plusieurs mois ou même plusieurs années, en particulier dans le cas d'une utilisation extérieure où ils sont continuellement soumis à des agressions répétées, notamment du type pluies acides ou pollution ambiante.

La présente invention se propose donc de fournir un substrat comprenant un empilement antireflet répondant à l'ensemble des problèmes techniques précédemment évoqués, c'est-à-dire un substrat présentant :

- de bonnes propriétés optiques, en particulier l'abaissement de la réflexion lumineuse du côté où il est muni d'un empilement de couches minces s'en trouve abaissée d'une valeur minimale de 3 ou même 4% selon un angle normal d'incidence, par rapport au substrat sans l'empilement, voire un abaissement de 6 ou même 7% de la réflexion lumineuse si l'empilement est présent sur les deux faces du substrat,
- des propriétés de colorimétrie acceptables, tant en transmission qu'en réflexion, avec en particulier une colorimétrie en réflexion lumineuse du côté où le substrat comprend l'empilement de couches minces telle que la valeur de b* correspondante dans le système de colorimétrie (L*, a*, b*) est négative, selon un angle normal d'incidence et de préférence dans laquelle le paramètre b* est proche ou inférieur à 10, en valeur absolue,
- une durabilité mécanique élevée et une bonne tenue aux traitements thermiques (recuit, trempe, bombage, pliage), et ceci sans compromettre la faisabilité économique et/ou industrielle de sa fabrication, en particulier une capacité du substrat ou du vitrage obtenu à partir du substrat à pouvoir être bombé à des rayons de courbures inférieurs à 1 mètre et même dans certains cas à des rayons de courbure de l'ordre de 10 cm, sans apparition de défauts optiques majeurs,
- une durabilité chimique améliorée, c'est-à-dire une capacité du substrat ou du vitrage obtenu à partir du substrat à résister à une exposition extérieure prolongée, sans apparition de défauts à sa surface, de changement de colorimétrie ou de flou.

Plus particulièrement, la présente invention se rapporte dans sa forme la plus générale à un substrat transparent, notamment verrier, comportant sur au moins une de ses faces un empilement antireflet, ledit empilement comprenant une alternance de couches, dont au moins une succession d'une couche à haut indice d'épaisseur comprise entre 40 et 125 nm, de préférence entre 50 et 120 nm, et faite en un matériau diélectrique d'indice optique supérieur à 1,80, notamment compris entre 1,9 et 2,2, et d'une couche à bas indice faite en un matériau diélectrique d'indice optique inférieur à 1,6, caractérisé en ce que ladite couche à haut indice dans ladite succession comprend ou de préférence est constitué par un matériau de formule générale $Sn_xZn_yO_z$, dans lequel le rapport massique Sn/Zn est compris entre 55/45 et 64/36.

Dans la présente description, toutes les épaisseurs sont géométriques (physiques) à moins qu'il soit spécifiquement indiqué qu'il s'agit d'une épaisseur optique.

Au sens de la présente invention, on entend par « succession » de deux couches, deux couches se succédant immédiatement dans l'empilement, en particulier en prenant comme point de référence la surface du substrat verrier.

D'une manière générale, toutes les caractéristiques lumineuses présentées dans la présente description sont obtenues selon les principes et méthodes décrits dans la norme européenne (et française) EN 410 se rapportant à la détermination des caractéristiques lumineuses et solaires des vitrages utilisés dans le verre pour la construction.

De manière conventionnelle, les indices optiques (ou de réfraction) donnés dans la présente description sont ceux mesurées à une longueur d'onde de 550nm.

Par $R_L$ et $T_L$, on entend au sens de la présente description les réflexions coté couche et transmissions, sous l'illuminant D65 avec un angle de 2°. Par (L*, a*, b*), on entend au sens de la présente invention les coordonnées de l'espace couleur sous l'illuminant D65 avec un angle de 2° en réflexion côté couche.

L'invention s'intéresse préférentiellement aux substrats verriers, mais peut éventuellement s'appliquer aussi aux substrats transparents à base de polymère, par exemple en polycarbonate.

Les critères d'épaisseur et d'indice de réfraction retenus dans l'invention permettent d'obtenir un effet antireflet dans le domaine du visible, présentant une teinte neutre en transmission et une bonne esthétique en réflexion, et ce quel que soit l'angle d'incidence sous lequel on observe le substrat ainsi revêtu. Les substrats selon l'invention permettent ainsi de minimiser la valeur de la réflexion lumineuse $R_L$ à incidence normale en elle-même tout en conservant une colorimétrie satisfaisante en réflexion lumineuse oblique, c'est-à-dire une couleur en réflexion dont la teinte et l'intensité sont acceptables sur le plan esthétique, et ceci sans compromettre les propriétés de durabilité mécanique et de résistance aux traitements thermiques de l'empilement. Les substrats et vitrages selon l'invention se caractérisent notamment par un abaissement notable (d'au moins 3%) de la valeur de $R_L$ dans le visible, et préférentiellement l'obtention de valeurs de b* dans le système de colorimétrie (L, a*, b*) négatives pour cette même réflexion lumineuse et proche ou inférieures à 10, en valeur absolue, les valeurs de a* restant proche de 0. Cela se traduit par une diminution significative des reflets et une couleur verte, bleue ou violette en réflexion (évitant l'aspect jaunâtre) qui est actuellement jugée esthétique dans de nombreuses applications, notamment dans le domaine du bâtiment.

Avantageusement, les substrats selon l'invention se caractérisent additionnellement par une durabilité chimique accrue, notamment de résistance à des conditions humides acides représentatives des conditions d'utilisation en extérieur.

Des propriétés de résistance à des traitements thermiques notamment du type trempe/bombage particulièrement bonne ont été observés lorsque le rapport massique dans le matériau est inférieur à 75/25 en particulier inférieur à 72/28 et tout particulièrement inférieur à 64/36.

Selon un premier mode de réalisation favorable pour une utilisation du substrat dans le domaine de l'automobile, les poids lourds, les trains, les cabines de bus ou encore les machines agricoles type tracteur, ladite couche à haut indice dans ladite succession présente une épaisseur comprise entre 50 et 95 nm et de préférence une épaisseur comprise entre 55 et 80 nm.

Selon un autre mode de réalisation favorable pour une utilisation du substrat dans le domaine du bâtiment, ladite couche à haut indice dans ladite succession présente une épaisseur comprise entre 80 et 125 nm et de préférence une épaisseur comprise entre 90 et 120 nm.

L'épaisseur de la couche d'indice de réfraction inférieur à 1,6 est généralement comprise entre 20 et 140 nm, notamment entre 40 et 120 nm.

De préférence, ladite couche à bas indice est constitué par un oxyde de silicium stœchiométrique $SiO_2$ ou sous stœchiométrique $SiO_x$ avec x<2, d'oxynitrure ou d'oxycarbure de silicium ou par un oxyde mixte de silicium et d'aluminium. Selon un mode de réalisation de l'invention privilégié, l'empilement à partir de la surface du substrat transparent comprend quatre couches successives dont :

- une première couche, à haut indice, d'indice de réfraction $n_1$ compris entre 1,8 et 2,5, de préférence entre 1,8 et 2,2 et d'une épaisseur géométrique $e_1$ comprise entre 5 et 50 nm, de préférence entre 15 et 30 nm,
- une seconde couche, à bas indice, d'indice de réfraction $n_2$ compris entre 1,35 et 1,65 et d'épaisseur géométrique $e_2$ comprise entre 5 et 50 nm, de préférence comprise entre 10 et 35 nm,
- une troisième couche d'épaisseur géométrique $e_3$ comprise entre 40 et 125 nm et comprenant ou de préférence est constitué par un matériau de formule générale $Sn_xZn_yO_z$, dans lequel le rapport massique Sn/Zn est compris entre 55/45 et 64/36,
- une quatrième couche, à bas indice, d'indice de réfraction $n_4$ compris entre 1,35 et 1,65 et d'épaisseur géométrique $e_4$ comprise entre 40 et 120 nm, de préférence entre 60 et 100 nm.

Selon un mode préféré mais non obligatoire, la première couche comprend ou de préférence est constitué par un matériau de formule générale $Sn_xZn_yO_z$, dans lequel le rapport massique Sn/Zn est compris entre 50/50 et 85/15 et de préférence est compris entre 55/45 et 75/25.

Selon un premier mode de réalisation favorable pour une utilisation du substrat dans le domaine de l'automobile, les poids lourds, les trains, les cabines de bus ou encore les machines agricoles type tracteur, la troisième couche à haut indice dans l'empilement précédemment décrit présente une épaisseur comprise entre 50 et 95 nm et de préférence une épaisseur comprise entre 55 et 80 nm.

Selon un autre mode de réalisation favorable pour une utilisation du substrat dans le domaine du bâtiment, la troisième couche à haut indice dans l'empilement précédemment décrit présente une épaisseur comprise entre 80 et 125 nm et de préférence une épaisseur comprise entre 90 et 120 nm.

Selon une variante de l'invention, on peut remplacer la première couche à haut indice et la seconde couche à bas indice par une couche unique à indice de réfraction dit "intermédiaire" $e_5$, notamment compris entre 1,65 et 1,80 et ayant de préférence une épaisseur optique $e_5$ comprise entre 40 et 130 nm, de préférence 50 à 90 nm. Cette couche à indice intermédiaire a un effet optique similaire à celui d'une séquence de deux couches à haut et bas indice quand il s'agit de la première séquence (i.e. la plus proche du substrat). Elle présente l'avantage de diminuer le nombre global de couches de l'empilement. Elle est de préférence composée par un oxynitrure de silicium $Si_xO_yN_z$ éventuellement dopé à l'aluminium. Elle peut également être constituée par un mélange entre d'une part de l'oxyde de silicium, et d'autre part un matériau de formule dopé à l'aluminium. Elle peut également être constituée par un mélange entre d'une part de l'oxyde de silicium, et d'autre part un matériau de formule générale $Sn_xZn_yO_z$ conforme à celui précédemment décrit, notamment dans lequel le rapport massique Sn/Zn est compris entre 50/50 et 85/15.

Les matériaux les plus appropriés pour constituer la première couche de l'empilement à quatre couches précédemment décrit, sont les oxyde(s) métallique(s) choisi(s) parmi l'oxyde de zinc (ZnO), l'oxyde d'étain ($SnO_2$), l'oxyde de zirconium ($ZrO_2$), les oxydes mixtes zinc-titane ($TiZnO_x$) ou silicium-titane ($Si_xTi_yO_z$) ou encore titane-zirconium $Ti_xZr_yO_z$. Ils peuvent aussi être choisis parmi les nitrure(s) comme le nitrure d'aluminium (AIN) ou préférentiellement le nitrure de silicium ($Si_3N_4$). Tous ces matériaux peuvent être éventuellement dopés pour améliorer leurs propriétés de résistance chimique et/ou mécanique et/ou pour faciliter le dépôt du matériau.

Les matériaux les plus appropriés pour constituer la seconde et/ou la quatrième couche de l'empilement à quatre couches précédemment décrit, celles à bas indice, sont les oxydes de silicium, d'oxynitrure et/ou d'oxycarbure de silicium ou encore un oxydes mixte de silicium et d'aluminium. De préférence, le matériau est un oxyde de silicium $SiO_2$ ou $SiO_x$, x<2.

Comme précédemment décrit, les substrats incorporant de telles couches dans leur empilement peuvent subir sans dommage, des traitements thermiques comme un recuit, une trempe, un bombage ou même un pliage. Durant ces traitements thermiques à haute température, les verres sont chauffés à au moins 120°C (feuilletage) jusqu'à 500 voire 700°C (bombage, trempe). Il devient alors décisif de pouvoir déposer les couches minces avant le traitement thermique sans que cela pose de problème car déposer des couches sur un verre bombé est délicat et coûteux, il est beaucoup plus simple sur le plan industriel de faire les dépôts avant tout traitement thermique.

Le bombage au sens de la présente invention comprend les bombages avec un petit rayon de courbure (de l'ordre de 1 m), ou même avec un très petit rayon de courbure (de l'ordre d'une dizaine de centimètres), typiquement pour une application relevant des vitrines, comptoirs de magasins en particulier, ou pour des pare-brises dont une portion périphérique présente un rayon de courbure faible, tels que les pare-brises de bus.

Le verre choisi pour le substrat revêtu de l'empilement selon l'invention ou pour les autres substrats qui lui sont associés pour former un vitrage, peut être particulier, par exemple extra-clair du type "Diamant", ou clair du type "Planilux" ou teinté du type "Parsol", trois produits commercialisés par Saint-Gobain Vitrage, ou encore être de type "TSA" ou "TSA ++" ou "TSA Nx" comme décrit dans le brevet EP 616 883. IL peut aussi s'agir de verres éventuellement teintés comme décrit dans les brevets WO 94/14716; WO 96/00194, EP 0 644 164 ou WO 96/28394. Il peut être filtrant vis-à-vis de rayonnements du type ultraviolet.

Selon un premier mode possible, ledit empilement antireflet est présent sur une seule face dudit substrat. Selon un autre mode ledit empilement antireflet est présent sur les deux faces dudit substrat.

L'invention a également pour objet les vitrages incorporant les substrats munis de l'empilement A de couches définies plus haut. Le vitrage en question peut être "monolithique" c'est-à-dire composé d'un seul substrat revêtu de l'empilement de couches sur une de ses faces. Sa face opposée peut être dépourvue de tout revêtement antireflet, en étant nue ou recouverte d'un autre revêtement B ayant une autre fonctionnalité. Il peut s'agir d'un revêtement à fonction anti-solaire (utilisant par exemple une ou plusieurs couches d'argent entourées de couches en diélectrique, ou des couches en nitrures comme NbN, TiN ou ZrN ou en oxydes métalliques ou en acier ou en alliage Ni-Cr), à fonction bas-émissive (par exemple en oxyde de métal dopé comme $SnO_2$:F ou oxyde d'indium dopé à l'étain ITO ou une ou plusieurs couches d'argent), à fonction anti-statique (oxyde métallique dopé ou sous-stoechiométrique en oxygène), couche chauffante (oxyde métallique dopé, Cu, Ag, $SnO_2$:F, ITO par exemple) ou réseau de fils chauffants (fils de cuivre ou bandes sérigraphiées à partir de pâte à l'argent conductrice), anti-buée (à l'aide d'une couche hydrophile), anti-pluie (à l'aide d'une couche hydrophobe, par exemple à base de polymère fluoré), anti-salissures (revêtement photocatalytique comprenant du $TiO_2$ au moins partiellement cristallisé sous forme anatase).

Ladite face opposée peut aussi être munie d'un empilement antireflet, pour maximiser l'effet antireflet recherché. Dans ce cas, soit il s'agit également d'un empilement antireflet répondant aux critères de la présente invention, soit il s'agit d'un autre type de revêtement antireflet.

Un autre vitrage intéressant incorporant un substrat revêtu selon l'invention a une structure feuilletée, qui associe deux substrats verriers à l'aide d'une ou plusieurs feuilles en matériau thermoplastique comme le polyvinylbutyral PVB. Dans ce cas, l'un des deux substrats est muni, en face externe (opposée à l'assemblage du verre avec la feuille thermoplastique), de l'empilement antireflet selon l'invention. L'autre verre, en face externe également, pouvant comme précédemment, être nu, revêtu de couches ayant une autre fonctionnalité, revêtu du même d'empilement antireflet ou d'un autre type (B) d'empilement antireflet, ou encore d'un revêtement ayant une autre fonctionnalité comme dans le cas précédent (cet autre revêtement peut aussi être disposé non pas sur une face opposée à l'assemblage, mais sur une des faces de l'un des substrats rigides qui se trouve tournée du côté de la feuille thermoplastique d'assemblage). On peut ainsi munir le vitrage feuilleté d'un réseau de fils chauffants, d'une couche chauffante ou d'un revêtement anti-solaire à l'"intérieur" du feuilleté.

L'invention comprend aussi les vitrages munis de l'empilement antireflet de l'invention et qui sont des vitrages multiples, c'est-à-dire utilisant au moins deux substrats séparés par une lame de gaz intermédiaire (double ou triple vitrage). Là encore, les autres faces du vitrage peuvent être également traitées antireflet ou présenter une autre fonctionnalité.

A noter que cette autre fonctionnalité peut aussi consister à disposer sur une même face l'empilement antireflet et l'empilement ayant une autre fonctionnalité (par exemple en surmontant l'antireflet d'une très fine couche de revêtement anti-salissures.), l'ajout de cette fonctionnalité supplémentaire ne se faisant pas bien entendu au détriment des propriétés optiques.

L'invention a également pour objet le procédé de fabrication des substrats verriers à revêtement antireflet selon l'invention.

En particulier, l'invention porte sur un tel procédé, comprenant une étape dans laquelle le matériau de formule générale $Sn_xZn_yO_z$ est obtenu dans l'empilement antireflet par pulvérisation cathodique réactive d'une cible constituée par un alliage d'étain et de zinc, en atmosphère oxydante.

Un procédé consiste à déposer l'ensemble des couches, successivement les unes après les autres, par une technique sous vide, notamment par pulvérisation cathodique d'une cible assistée par champ magnétique ou par décharge couronne. Ainsi, on peut déposer les couches d'oxyde par pulvérisation réactive du métal en question en présence d'oxygène et les couches en nitrure en présence d'azote. Pour faire du $SiO_2$ ou du $Si_3N_4$, on peut partir d'une cible en silicium que l'on dope avec un métal comme l'aluminium pour la rendre suffisamment conductrice.

Les détails et caractéristiques avantageuses de l'invention sont plus particulièrement détaillés ci-après, dans les exemples qui suivent.

Tous les exemples qui suivent concernent des empilements antireflets à quatre couches. Les couches ont toutes été déposées selon les techniques conventionnelles et bien connues de pulvérisation cathodique d'une cible, assistée par champ magnétique et réactive sans qu'il soit besoin de décrire plus en détail cette technique bien connue. Les différentes couches ont été obtenues en continu dans une même installation munie de compartiments dédiés au dépôt de chacune des couches constituant l'empilement.

Le dépôt des couches de $SiO_2$ a été obtenu de manière classique en atmosphère oxydante faite d'un mélange $Ar/O_2$ et à partir de la pulvérisation de cibles en Si métallique. La pression d'Argon, le débit d'oxygène et le ratio des gaz $Ar/O_2$ dans le dispositif de pulvérisation ont été réglés selon les techniques bien connues de l'homme du métier. Les cibles en Si utilisées contenaient de l'Aluminium métallique (8% poids), notamment afin de les rendre plus conductrices.

Le dépôt des couches d'oxyde mixte de zinc et d'étain a été obtenu en atmosphère oxydante faite d'un mélange $Ar/O_2$ et par pulvérisation de cibles métalliques comprenant un mélange de zinc et d'étain sous forme métallique, la composition du mélange étant adaptée à l'obtention du rapport Sn/Zn dans la couche $Sn_xZn_yO_z$ finalement obtenue dans l'empilement antireflet.

Dans tous les exemples qui suivent, la composition des couches et notamment le rapport Sn/Zn a été mesuré par les techniques classiques de microsonde de castaing (également appelée en anglais Electron Probe Microanalyser ou EPMA).

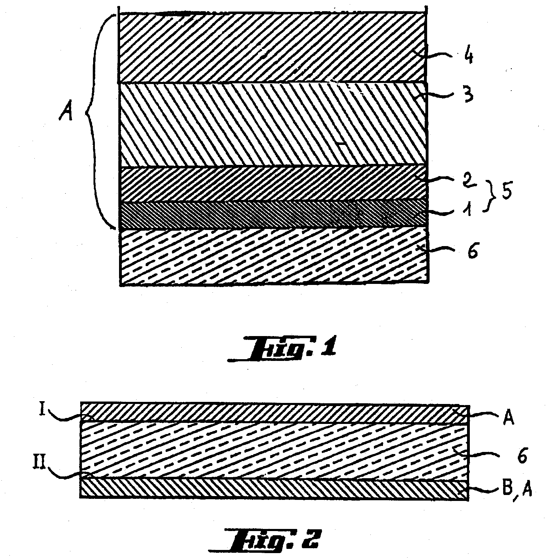

Les substrats décrits dans les exemples suivants 1 et 2 selon l'invention sont par ailleurs illustrés à l'aide des figures 1 et 2 annexées.

Les figures 1 et 2 représentent schématiquement les substrats obtenus selon les exemples 1 et 2 qui suivent, comprenant sur une seule face (figure 1) ou sur les deux faces (figure 2) un empilement antireflet à quatre couches selon l'invention.

Sur la figure 1 un support verrier 6 comporte un empilement A de couches dont une première couche 1 dite à haut indice. Cette première couche 1 est un matériau de formule générale $Sn_xZn_yO_z$, dans lequel le rapport massique Sn/Zn est compris entre 50/50 et 85/15. L'indice optique de cette couche est proche de 2,0 à 550 nm. L'épaisseur de cette couche est par exemple comprise entre 15 et 30 nm. Sur cette première couche 1 est déposée par les techniques du magnétron décrites précédemment une couche 2 de $SiO_2$, d'indice optique d'environ 1,48, d'épaisseur par exemple comprise entre 8 et 35 nanomètres. Ces deux premières couches peuvent selon l'invention être remplacées par une couche unique 5 d'indice optique intermédiaire, comme décrit précédemment. Sur ces deux premières couches 1 et 2 ou cette couche unique 5, une troisième couche 3 du matériau $Sn_xZn_yO_z$ est déposée, sensiblement identique en composition à la précédente, c'est-à-dire obtenue à partir de la même cible métallique, et d'épaisseur par exemple comprise entre 50 et 120 nm. Une quatrième couche de $SiO_2$, par exemple d'épaisseur comprise entre 45 et 110 nm, complète l'empilement.

Sur la figure 2, on a reproduit un substrat sur lequel l'empilement A précédent est déposé sur les 2 faces du support verrier 6. Alternativement un autre empilement B présentant des caractéristiques différentes mais toujours conforme à la présente invention peut être déposé sur l'autre face.

**Exemples** :

Exemple 1 :

Le verre est un verre clair silico-sodo-calcique de 4 mm d'épaisseur, commercialisé sous le nom de Planilux par Saint-Gobain Vitrage. L'empilement déposé est présent sur une seule face du support verrier et est constitué par les couches successives suivantes:

(6) : Verre
(1) : $Sn_xZn_yO_z$ d'épaisseur 21 nm et de rapport massique Sn/Zn d'environ 70/30, tel que mesuré en microsonde,
(2): $SiO_2$ d'épaisseur 26 nm,
(3) : $Sn_xZn_yO_z$ d'épaisseur 60 nm, et de rapport massique Sn/Zn d'environ 70/30, tel que mesuré en microsonde,
(4): $SiO_2$ d'épaisseur 94 nm.

Exemple 2 :

Cet exemple est identique au précédent, à la différence que l'empilement est présent cette fois sur les deux faces du support verrier.

Les propriétés optiques et de colorimétrie des substrats selon les exemples 1 et 2 ont été mesurées. Les résultats expérimentaux sont regroupés dans le tableau 1 qui suit :

Tableau 1

| | $T_L$ (%) | $R_L$ (%) | a* | b* |
|---|---|---|---|---|
| Exemple 1 | 93,8 | 4,58 | -0,34 | -2,08 |
| Exemple 2 | 97,6 | 0,65 | 3,6 | -11,0 |

Les résultats reportés dans le tableau ci-dessus démontre l'effet antireflet de l'empilement présent à la surface du support verrier : alors que le verre nu présente une réflexion $R_L$ supérieure à 8%, celle-ci est abaissée à 4,6 %, voire même à 0,65 % lorsque l'empilement est déposé sur les deux faces.

Les deux empilements ont ensuite été soumis à deux traitements thermiques représentatifs de conditions industrielles, l'un consistant en une trempe et l'autre à un bombage.

La trempe est effectuée en chauffant le substrat à environ 700 °C pendant 170 s puis en le refroidissant brusquement. Pour les deux substrats des exemples 1 et 2, aucun défaut macroscopique n'est observé après trempe, et l'échantillon ne présente pas de flou en lumière intense ou au Hazemeter (mesure faite au Hazemeter+, commercialisé par BYK Gardner).

Le bombage est effectué par gravité en posant le verre sur un cadre prévu à cet effet et en le chauffant à 680 °C pendant 7 à 9 minutes. Les rayons de courbures atteints sont de l'ordre de 15 cm. Après bombage du substrat de l'exemple 1, aucun défaut macroscopique n'est observé après trempe, et l'échantillon ne présente pas de flou en lumière intense ou au Hazemeter (mesure faite au Hazemeter Haze-gard plus, commercialisé par BYK Gardner).

L'empilement 1 a ensuite été soumis à un traitement chimique de vieillissement accéléré représentatif des attaques acides auxquelles est exposé un vitrage utilisé en extérieur selon la norme EN 1096. Plus précisément, le test consiste à placer le substrat pendant 24 heures (1 cycle) dans une atmosphère acide saturée en dioxyde de soufre et à température constante.

Après une série de cinq cycles (selon la norme EN 1096), les empilements ne sont pas dégradés : leur surface ne présente aucune marque visible.

Sur le substrat selon l'exemple 1, la différence de transmission lumineuse avant et après test ($\Delta TL = T_L^*_{(après\ test)} - T_L^*_{(avant\ test)}$) est en valeur absolue inférieure à 1 %. De plus un Delta E ($\Delta E$) mesurant les variations de couleur en réflexion avant et après test de vieillissement accéléré a été déterminé de la façon suivante :

$$\Delta E = ((L^*_{(après\ test)} - L^*_{(avant\ test)})^2 + (a^*_{(après\ test)} - a^*_{(avant\ test)})^2 + (b^*_{(après\ test)} - b^*_{(avant\ test)})^2)^{1/2}$$

où L*, a* et b* sont les coordonnées colorimétriques CIE 1931 mesurées en faisant le spectre en réflexion de l'échantillon sur tout le domaine du visible, la couche étant placée du côté du rayonnement incident (illuminant D65, angle de 2°).

Le $\Delta E$ mesuré sur l'échantillon de l'exemple 1 après 5 cycles $SO_2$ est de 0,3, ce qui indique une très variation globale de sa couleur en réflexion et une utilisation avantageuse sous atmosphère extérieure, notamment acide.

Exemple 3 (comparatif) :

Dans cet exemple, les mêmes techniques que précédemment décrites ont été employées, mais les épaisseurs des couches successives ont été modifiées. La composition de la cible métallique comprenant un mélange de zinc et d'étain sous forme métallique a également été modifiée, pour l'obtention de couches haut indice $Sn_xZn_yO_z$ présentant un rapport massique Sn/Zn égal à 45/55.

Le substrat comprend ainsi la succession de couches suivantes :

(6) :   Verre
(1) :   $Sn_xZn_yO_z$   , épaisseur 25 nm, rapport massique Sn/Zn = 45/55
(2) :   $SiO_2$   , épaisseur 10 nm,
(3) :   $Sn_xZn_yO_z$   , épaisseur 72 nm, rapport massique Sn/Zn = 45/55
(4) :   $SiO_2$   , épaisseur 85 nm.

Les propriétés optiques et de colorimétrie du substrat comparatif selon l'exemple 3 ont été mesurées tout comme précédemment décrit. Les résultats obtenus sont similaires à ceux décrits précédemment pour le substrat selon l'exemple 1.

Les deux tests de traitements thermiques précédemment décrits ont été effectués sur le substrat selon l'exemple 3 comparatif : une trempe et un bombage par gravité.

Pour cet empilement, aucun défaut macroscopique n'est observé après les traitements thermiques de bombage ou de trempe et l'échantillon ne présente pas de flou en lumière intense ou au Hazemeter.

Le test de résistance chimique au vieillissement accéléré a été pratiqué sur le substrat selon l'exemple 3. Après 5 cycles $SO_2$ (0,2 L, conditions de la norme EN 1096), l'empilement est cette fois très largement dégradé : il présente des traces blanchâtres sur toute sa surface, le rendant très inesthétique et inapte à une vision claire à travers son épaisseur.

Le $\Delta E$ mesuré sur l'échantillon de l'exemple 3 après 5 cycles $SO_2$ est de 8, ce qui indique une très sensible variation globale de sa couleur en réflexion qui sera nécessairement observée lors d'une utilisation prolongée en atmosphère extérieure.

Des tests de vieillissement accéléré, pratiqués sur des substrats comprenant des couches de $Sn_xZn_yO_z$ dont le rapport massique est de 21/79 et 35/65 (correspondant au composé $SnZn_2O_4$) donnent des résultats similaires : le substrat présente dans ces deux cas les mêmes traces blanchâtres sur toute sa surface, réduisant son potentiel d'utilisation en extérieur sur une longue durée.

Exemple 4 :

Les techniques de dépôt et l'empilement utilisées dans cet exemple sont identiques à celui de l'exemple 3 précédent, à la seule différence que la composition de la cible métallique utilisée est cette fois adaptée pour l'obtention de couches $Sn_xZn_yO_z$ dont le rapport massique est de 79/21, tel que mesuré par microsonde castaing.

Après les 5 cycles $SO_2$ du test de vieillissement chimique précédemment décrit, l'empilement n'est pas apparu dégradé (pas de défauts visibles à l'œil nu).

Pour cet empilement, un flou blanc important est cependant observé après les traitements thermiques (trempe, recuit à plat à 680 °C pendant 8 minutes, ou bombage à 680 °C pendant 7 à 9 minutes, de façon à avoir un rayon de courbure de 15 cm).

En particulier après le bombage, un flou est visible à l'œil nu. Lorsqu'un échantillon de 10*10 cm est recuit à plat à 680 °C pendant 8 minutes, le flou mesuré par Hazemeter est d'environ 3,5 %. Un traitement thermique à plus faible température (650°C) ne génère cependant pas de flou excessif.

Exemple 5 :

Les techniques de dépôt et l'empilement utilisées dans cet exemple sont identiques à celui de l'exemple 1 précédent, mais la composition de la cible métallique utilisée est cette fois adaptée pour l'obtention de couches de formulation générale $Sn_xZn_yO_z$ dont le rapport massique Sn/Zn est de 73/27, tel que mesuré par microsonde de Castaing.

Après les 5 cycles $SO_2$ du test de vieillissement chimique précédemment décrit, l'empilement n'est pas apparu dégradé (pas de défauts visibles à l'œil nu).

Pour cet empilement, bien que moins important que dans l'exemple 4 précédent, un flou est observé après le traitement thermique à 680°C. En outre, après ledit bombage du substrat, quelques fissures en forme d'étoile sont observées dans le revêtement antireflet.

Exemple 6 :

Les techniques de dépôt et l'empilement utilisées dans cet exemple sont identiques à celui de l'exemple 1 précédent, à la seule différence que la composition de la cible métallique utilisée est cette fois adaptée pour l'obtention de couches de formulation générale $Sn_xZn_yO_z$ dont le rapport massique Sn/Zn est de 60/40, tel que mesuré par microsonde de Castaing.

Après les 5 cycles $SO_2$ du test de vieillissement chimique précédemment décrit, l'empilement n'est pas apparu dégradé (pas de défauts visibles à l'œil nu).

Pour cet empilement, après ledit bombage du substrat tel que décrit dans l'exemple 1, aucune fissure ou défaut macroscopique n'est en outre observé sur le revêtement antireflet.

Des résultats similaires ont été obtenus avec des couches $Sn_xZn_yO_z$ dont le rapport massique Sn/Zn est de 56/44.

**Revendications**

1. Substrat transparent verrier, comportant sur au moins une de ses faces un empilement antireflet, ledit empilement comprenant une alternance de couches, dont au moins une succession d'une couche à haut indice d'épaisseur comprise entre 40 et 125 nm et faite en un matériau diélectrique d'indice de réfraction supérieur à 1,80 et d'une couche à bas indice faite en un matériau diélectrique d'indice de réfraction inférieur à 1,6, **caractérisé en ce que** ladite couche à haut indice dans ladite succession comprend ou de préférence est constituée par un matériau de formule générale $Sn_xZn_yO_z$, dans lequel le rapport massique Sn/Zn est compris entre 55/45 et 64/36.

2. Substrat selon l'une des revendications précédentes, **caractérisé en ce que** ladite couche à haut indice dans ladite succession présente une épaisseur comprise entre 50 et 95 nm et de préférence une épaisseur comprise entre 55 et 80 nm.

3. Substrat selon la revendication 1, **caractérisé en ce que** ladite couche à haut indice dans ladite succession présente une épaisseur comprise entre 80 et 125 nm et de préférence une épaisseur comprise entre 90 et 120 nm.

4. Substrat selon l'une des revendications précédentes, **caractérisé en ce que** ladite couche à bas indice est constitué par un oxyde de silicium stœchiométrique $SiO_2$ ou sous stœchiométrique $SiO_x$ avec x<2, d'oxynitrure ou d'oxycarbure de silicium ou par un oxyde mixte de silicium et d'aluminium.

5. Substrat selon l'une des revendications précédentes, comprenant à partir de la surface du substrat transparent :

   - une première couche (1), à haut indice, d'indice de réfraction $n_1$ compris entre 1,8 et 2,5 de préférence entre 1,8 et 2,2, et d'une épaisseur géométrique $e_1$ comprise entre 5 et 50 nm,
   - une seconde couche (2), à bas indice, d'indice de réfraction $n_2$ compris entre 1,35 et 1,65 et d'épaisseur géométrique $e_2$ comprise entre 5 et 50 nm,
   - une troisième couche (3) d'épaisseur géométrique $e_3$ comprise entre 50 et 125 nm et comprenant ou de préférence constitué par un matériau de formule générale $Sn_xZn_yO_z$, dans lequel le rapport massique Sn/Zn est compris entre 55/45 et 64/36,
   - une quatrième couche (4), à bas indice, d'indice de réfraction $n_4$ compris entre 1,35 et 1,65 et d'épaisseur géométrique $e_4$ comprise entre 40 et 120 nm.

6. Substrat selon la revendication précédente, **caractérisé en ce que** la première couche (1) comprend ou de préférence est constitué par un matériau de formule générale $Sn_xZn_yO_z$, dans lequel le rapport massique Sn/Zn est compris entre 50/50 et 85/15.

7. Substrat selon l'une des revendications 1 à 4, comprenant à partir de la surface du substrat transparent:

   - une première couche, d'indice de réfraction $n_i$ compris entre 1,65 et 1,80 et d'une épaisseur optique $e_5$ comprise entre 40 et 130 nm, de préférence entre 50 et 90 nm,
   - une seconde couche d'épaisseur géométrique $e_3$ comprise entre 50 et 125 nm et comprenant ou de préférence est constitué par un matériau de formule générale $Sn_xZn_yO_z$, dans lequel le rapport massique Sn/Zn est compris entre 55/45 et 64/36,
   - une troisième couche d'indice de réfraction $n_4$ compris entre 1,35 et 1,65 et d'épaisseur géométrique $e_4$ comprise entre 40 et 120 nm.

8. Substrat selon l'une des revendications précédentes, dans lequel ledit empilement antireflet est présent sur une seule face dudit substrat.

9. Substrat selon l'une des revendications précédentes, dans lequel ledit empilement antireflet est présent sur les deux faces dudit substrat.

10. Vitrage multiple, notamment double, ou structure feuilletée, comportant au moins un substrat selon l'une quelconque des revendications 1 à 9.

11. Procédé d'obtention d'un substrat selon l'une des revendications 1 à 9, comprenant une étape dans laquelle le matériau de formule générale $Sn_xZn_yO_z$ est obtenu dans l'empilement antireflet par pulvérisation cathodique réactive d'une cible constituée par un alliage d'étain et de zinc en atmosphère oxydante.

**Patentansprüche**

1. Transparentes Glassubstrat, umfassend auf mindestens einer seiner Seiten ein Antireflex-Schichtsystem, wobei das Schichtsystem eine Wechselfolge von Schichten aufweist, darunter mindestens eine Folge aus einer Hochindexschicht, die eine Dicke zwischen 40 und 125 nm hat und aus einem dielektrischen Material mit einem Brechungsindex von mehr als 1,80 besteht, und einer Niedrigindexschicht, die aus einem dielektrischen Material mit einem Brechungsindex von weniger als 1,6 besteht, **dadurch gekennzeichnet, dass** die Hochindexschicht in der Folge ein Material mit der allgemeinen Formel $Sn_xZn_yO_z$ umfasst oder bevorzugt daraus besteht, wobei das Massenverhältnis Sn/Zn zwischen 55/45 und 64/36 liegt.

2. Substrat nach vorhergehendem Anspruch, **dadurch gekennzeichnet, dass** die Hochindexschicht in der Folge eine Dicke zwischen 50 und 95 nm und bevorzugt eine Dicke zwischen 55 und 80 nm aufweist.

3. Substrat nach Anspruch 1, **dadurch gekennzeichnet, dass** die Hochindexschicht in der Folge eine Dicke zwischen 80 und 125 nm und bevorzugt eine Dicke zwischen 90 und 120 nm aufweist.

4. Substrat nach einem der vorhergehenden Ansprüche, **dadurch gekennzeichnet, dass** die Niedrigindexschicht aus einem stöchiometrischen Siliciumoxid $SiO_2$ oder unterstöchiometrischem Siliziumoxid $SiO_x$ mit x < 2, aus Siliciumoxynitrid oder -oxycarbid oder aus einem Silicium-Aluminium-Mischoxid besteht.

5. Substrat nach einem der vorhergehenden Ansprüche, umfassend, ausgehend von der Oberfläche des transparenten Substrats:

   - eine erste Schicht (1) mit hohem Index mit einem Brechungsindex $n_1$ zwischen 1,8 und 2,5, bevorzugt zwischen 1,8 und 2,2, und einer geometrischen Dicke $e_1$ zwischen 5 und 50 nm,
   - eine zweite Schicht (2) mit niedrigem Index mit einem Brechungsindex $n_2$ zwischen 1,35 und 1,65 und einer geometrischen Dicke $e_2$ zwischen 5 und 50 nm,
   - eine dritte Schicht (3) mit einer geometrischen Dicke $e_3$ zwischen 50 und 125 nm, die ein Material mit der allgemeinen Formel $Sn_xZn_yO_z$ umfasst oder bevorzugt daraus besteht, wobei das Massenverhältnis Sn/Zn zwischen 55/45 und 64/36 liegt,
   - eine vierte Schicht (4) mit niedrigem Index mit einem Brechungsindex $n_4$ zwischen 1,35 und 1,65 und einer geometrischen Dicke $e_4$ zwischen 40 und 120 nm.

6. Substrat nach vorhergehendem Anspruch, **dadurch gekennzeichnet, dass** die erste Schicht (1) ein Material mit der allgemeinen Formel $Sn_xZn_yO_z$ umfasst oder bevorzugt daraus besteht, wobei das Massenverhältnis Sn/Zn zwischen 50/50 und 85/15 liegt.

7. Substrat nach einem der Ansprüche 1 bis 4, umfassend, ausgehend von der Oberfläche des transparenten Substrats:

   - eine erste Schicht mit einem Brechungsindex $n_i$ zwischen 1,65 und 1,80 und einer optischen Dicke $e_5$ zwischen 40 und 130 nm, bevorzugt zwischen 50 und 90 nm,
   - eine zweite Schicht mit einer geometrischen Dicke $e_3$ zwischen 50 und 125 nm, die ein Material mit der allgemeinen Formel $Sn_xZn_yO_z$ umfasst oder bevorzugt daraus besteht, wobei das Massenverhältnis Sn/Zn zwischen 55/45 und 64/36 liegt,
   - eine dritte Schicht mit einem Brechungsindex $n_4$ zwischen 1,35 und 1,65 und geometrischer Dicke $e_4$ zwischen 40 und 120 nm.

8. Substrat nach einem der vorhergehenden Ansprüche, wobei das Antireflex-Schichtsystem auf einer einzigen Seite des Substrats vorhanden ist.

9. Substrat nach einem der vorhergehenden Ansprüche, wobei das Antireflex-Schichtsystem auf den beiden Seiten des Substrats vorhanden ist.

10. Mehrfachverglasung, insbesondere Doppelverglasung oder Verbundglasstruktur, mit mindestens einem Substrat nach einem der Ansprüche 1 bis 9.

11. Verfahren zum Erhalten eines Substrats nach einem der Ansprüche 1 bis 9, umfassend einen Schritt, bei dem das Material mit der allgemeinen Formel $Sn_xZn_yO_z$ im Antireflex-Schichtsystem durch reaktives Sputtern eines Targets aus einer Zinn-ZinkLegierung in einer oxidierenden Atmosphäre erhalten wird.

**Claims**

1. A transparent glass substrate, comprising an antireflection multilayer on at least one of its faces, said multilayer comprising an alternation of films including at least one succession of a high-index film between 40 and 125 nm in thickness and made of a dielectric material with a refractive index above 1.80, and a low-index film made of a dielectric material with a refractive index below 1.6, **characterized in that** said high-index film in said succession comprises, or preferably consists of, a material having the general formula $Sn_xZn_yO_z$, in which the Sn/Zn mass ratio is between 55/45 and 64/36.

2. The substrate as claimed in either one of the preceding claims, **characterized in that** said high-index film in said succession is between 50 and 95 nm in thickness, and is preferably between 55 and 80 nm in thickness.

3. The substrate as claimed in claim 1, **characterized in that** said high-index film in said succession is between 80 and 125 nm in thickness, and preferably between 90 and 120 nm in thickness.

4. The substrate as claimed in one of the preceding claims, **characterized in that** said low-index film is made of a stoichiometric silicon oxide, $SiO_2$, or a substoichiometric silicon oxide, $SiO_x$, where $x < 2$, of silicon oxynitride or oxycarbide or of a mixed silicon aluminum oxide.

5. The substrate as claimed in one of the preceding claims, comprising, starting from the surface of the transparent substrate:

    - a high-index first film (1) with a refractive index $n_1$ of between 1.8 and 2.5, preferably of between 1.8 and 2.2, and a geometric thickness e1 of between 5 and 50 nm;
    - a low-index second film (2) with a refractive index $n_2$ of between 1.35 and 1.65 and a geometric thickness $e_2$ of between 5 and 50 nm;
    - a third film (3) with a geometric thickness $e_3$ of between 50 and 125 nm and comprising, or preferably consisting of, a material having the general formula $Sn_xZn_yO_z$, in which the Sn/Zn mass ratio is between 55/45 and 64/36; and
    - a low-index fourth film (4) with a refractive index $n_4$ of between 1.35 and 1.65 and a geometric thickness $e_4$ of between 40 and 120 nm.

6. The substrate as claimed in the preceding claim, **characterized in that** the first film (1) comprises, or preferably consists of, a material having the general formula $Sn_xZn_yO_z$, in which the Sn/Zn mass ratio is between 50/50 and 85/15.

7. The substrate as claimed in one of claims 1 to 4, comprising, starting from the surface of the transparent substrate:

    - a first film, with a refractive index $n_i$ of between 1.65 and 1.80 and an optical thickness $e_5$ of between 40 and 130 nm, preferably of between 50 and 90 nm;
    - a second film with a geometric thickness $e_3$ of between 50 and 125 nm and comprising, or preferably consisting of, a material having the general formula $Sn_xZn_yO_z$, in which the Sn/Zn mass ratio is between between 55/45 and 64/36; and
    - a third film with a refractive index $n_4$ of between 1.35 and 1.65 and with a geometric thickness $e_4$ of between 40 and 120 nm.

8. The substrate as claimed in one of the preceding claims, in which said antireflection multilayer is present on only one face of said substrate.

9. The substrate as claimed in one of the preceding claims, in which said antireflection multilayer is present on both faces of said substrate.

10. A multiple, especially double, glazing unit or a laminated structure, comprising at least one substrate equipped with a multilayer as claimed in any one of claims 1 to 9.

11. A process for obtaining a substrate as claimed in one of claims 1 to 9, comprising a step in which the material having the general formula $Sn_xZn_yO_z$ is obtained in the antireflection multilayer by reactive sputtering of a tin-zinc alloy target in an oxidizing atmosphere.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0515847 A
- WO 2004005210 A
- EP 616883 A
- WO 9414716 A
- WO 9600194 A
- EP 0644164 A
- WO 9628394 A